# EUROPEAN PATENT APPLICATION

(11) **EP 2 620 710 A1**
(43) Date of publication of application: **31.07.2013**
(21) Application number: 13152390.4
(22) Date of filing: 23.01.2013
(51) Int. Cl.: F23R 3/10, F23R 3/28, F23D 14/08, F23D 14/64, F23D 14/66, F23D 14/70

(54) **Bundled multi-tube nozzle assembly**

(30) Priority: 26.01.2012 US 201213359033
(71) Applicant: General Electric Company, Schenectady, New York 12345 (US)
(72) Inventor: Stewart, Jason Thurman, Greenville, SC South Carolina 29615-4614 (US); Hughes, Michael John, Greenville, SC South Carolina 29615-4614 (US); Keener, Christopher Paul, Greenville, SC South Carolina 29615-4614 (US); Berry, Jonathan Dwight, Greenville, SC South Carolina 29615-4614 (US)
(74) Representative: Cleary, Fidelma

(57) **Abstract**

A method for reducing emissions in a turbo machine is disclosed. The method includes providing fuel to a multi-tube nozzle (10) and reducing the differences in the mass flow rate of fuel into each tube (15). An improved multi-tube nozzle (10) is also disclosed. The nozzle (9) includes an assembly (23, 29) that reduces the difference in the mass flow rate of fuel into each tube (15).

## Description

### TECHNICAL FIELD

The subject matter disclosed herein relates to nozzle assemblies for turbo machines and more specifically to bundled multi-tube nozzle assemblies.

### BACKGROUND

Bundled multi-tube nozzles have been used as fuel injection nozzles for gas turbines. A typical bundled multi-tube nozzle includes a main body section and a plurality of tubes. The mini tube nozzle also includes a fuel inlet through which fuel is conveyed to a plenum defined by the main body section and the exterior surface of the tubes. The fuel fills the plenum and is distributed about each of the tubes. Each tube includes a fuel inlet. Fuel entering the tubes is provided with an interval to mix with air passing through the tube so as to facilitate injection of a lean fuel/air mixture into a combustion chamber. Representative bundled multi-tube nozzles for use in turbo machines are described in co-owned U.S. patent application Ser. No. US 2010/0186413 A1.

Emissions from gas turbines are tightly controlled. Specifically, emissions of nitrogen oxides (NO and NO2, collectively referred to as NOx) are subject to strict regulatory limits. Bundled multi-tube nozzles have been used to achieve low NOx levels by ensuring good mixing of fuel and air prior combustion.

In bundled multi-tube nozzles used as fuel injection nozzles for gas turbines, the fuel supply is often at a temperature of 300° to 600 ° F (150° - 315° C) (or more) cooler than the compressor discharge air temperature. Heat transfer from the tubes (which have hot air flowing through them) to the fuel can create very large differences in fuel temperature at the point of injection into the air through fuel apertures in the tubes, depending on location of the tubes within the nozzle. These differences in fuel temperatures result in a large spatial variation of density of the fuel at the pint of injection through the fuel apertures. This spatial density variation results in a significant difference in mass flow rate of fuel through the fuel apertures into each tube. This in turn results in some tubes being richer than the average and consequently into higher NOx emissions.

### BRIEF DESCRIPTION OF THE INVENTION

According to one aspect of the invention, a method for reducing emissions in a turbo machine includes providing fuel to the fuel nozzle having a plenum and a plurality of tubes each having a fuel aperture. The method further includes reducing the differences in the mass flow rate of the fuel into each tube.

According to another aspect of the invention, a method for reducing differences in the fuel to air ratio in each of a plurality of tubes in a fuel nozzle includes flowing the fuel around the tubes for a distance that reduces differences in the temperature of the fuel entering each tube.

According to another aspect of the invention a method for reducing differences in fuel to air ratio across a plurality of tubes in a multi-tube fuel nozzle includes reducing differences in fuel temperature between the fuel flowing into each tube.

According to another aspect of the invention, a fuel nozzle includes a housing, a plurality of tubes with each tube having at least one opening and an assembly that reduces differences in fuel mass flow rate into each tube.

### BRIEF DESCRIPTION OF THE DRAWINGS

Embodiments of the present invention will now be described, by way of example only, with reference to the accompanying drawings, in which:
Figure 1 is a cross-sectional view of a conventional bundled multi-tube fuel nozzle.
Figure 2 is a cross-sectional side view of a bundled multi-tube fuel nozzle according to one embodiment of the present invention.
Figure 3 is a cross-sectional top view of a bundled multi-tube fuel nozzle according to one embodiment of the present invention.
Figure 4 is a partial isometric view of a bundled multi tube fuel nozzle according to one embodiment of the present invention.
Figure 5 is a cross-sectional side view of a bundled multi-tube fuel nozzle according to one embodiment of the present invention.
Figure 6 is a perspective view of a bundled multi-tube fuel nozzle according to one embodiment of the present invention.

### DETAILED DESCRIPTION OF THE INVENTION

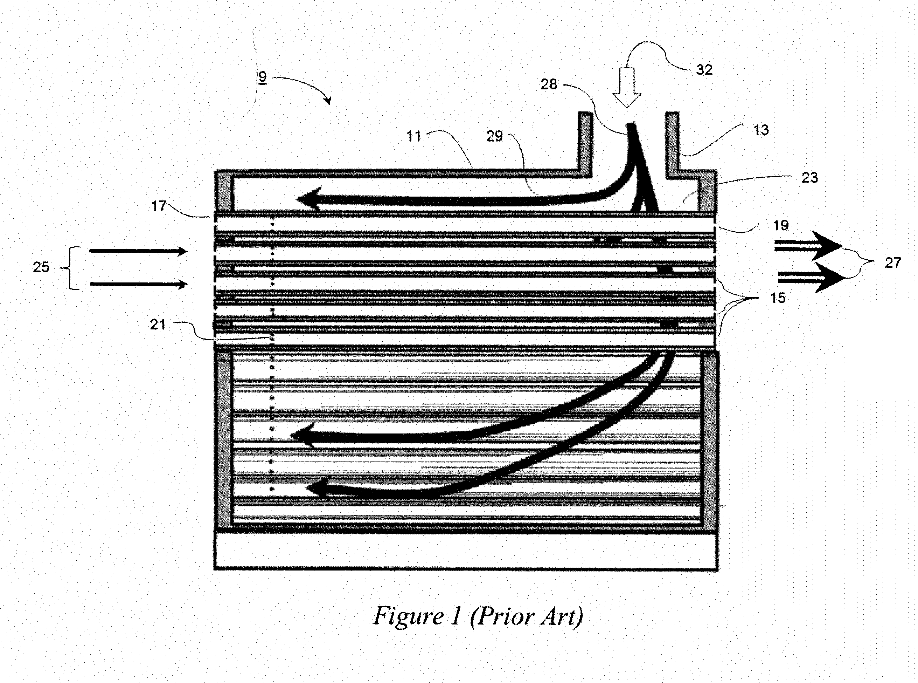

Figure 1 represents a conventional multi-tube nozzle 9, having a housing 11, and a fuel inlet port 13. The housing supports a plurality of tubes 15. In the illustration in Figure 1, the top five tubes 15 are shown in cross-section, and the bottom six tubes 15 are shown in a side view. Each tube 15 includes a tube inlet 17 (proximate end) and a tube outlet 19 (distal end) and one or more fuel apertures 21. The fuel aperture 21 may preferably be disposed near the tube inlet 17. The housing 11 and the external surfaces of the tubes 15 define a plenum 23. The plenum 23 is a space that is filled with fuel during the operation of the multi-tube nozzle assembly 10. During the operation of the multi-tube nozzle 9, compressed air (indicated by arrows 25 in Figure 1) flows into the tube inlet 17 of each tube 15. Fuel from the plenum 23 flows through the fuel apertures 21 and mixes with the compressed air. An air fuel mixture (illustrated by arrows 27 in Figure 1) flows from the tube outlets 19 into a combustor (not shown). Figure 1 illustrates the fuel path 28 of the conventional multi-tube nozzle 9. From Figure 1 it can be appreciated that the fuel path 28 from the fuel inlet port 13 to the fuel apertures 21 will vary significantly depending on where the aperture 21 is situated. For example, the fuel path 28 to the tube 15 located nearest to the fuel inlet port 13 will be significantly shorter than the fuel path 28 to the tube located furthest away from the fuel inlet port 13.

Because the fuel supply is often at a temperature of 300° to 600° F (149° - 315° C) (or more) cooler than the compressor discharge air temperature, heat transfer from the tubes 15 (which have hot air flowing through them) to the fuel can create very large differences in fuel temperature at the point of injection through the fuel apertures 21, depending on the position of the tube 15 within the multi-tube nozzle 9. This large spatial variation in fuel temperature results in a large spatial variation of density of the fuel. This spatial density variation results in a significant difference in mass flow rate of fuel into each tube. The large spatial variation of fuel flow into the tubes is a problem because one major design goal in achieving low emissions is to supply the same amount of air and fuel into each tube. If each tube has the same amount of air, variations of fuel flow into the tubes will result in some tubes being richer than the average and this will directly translate to higher NOx.

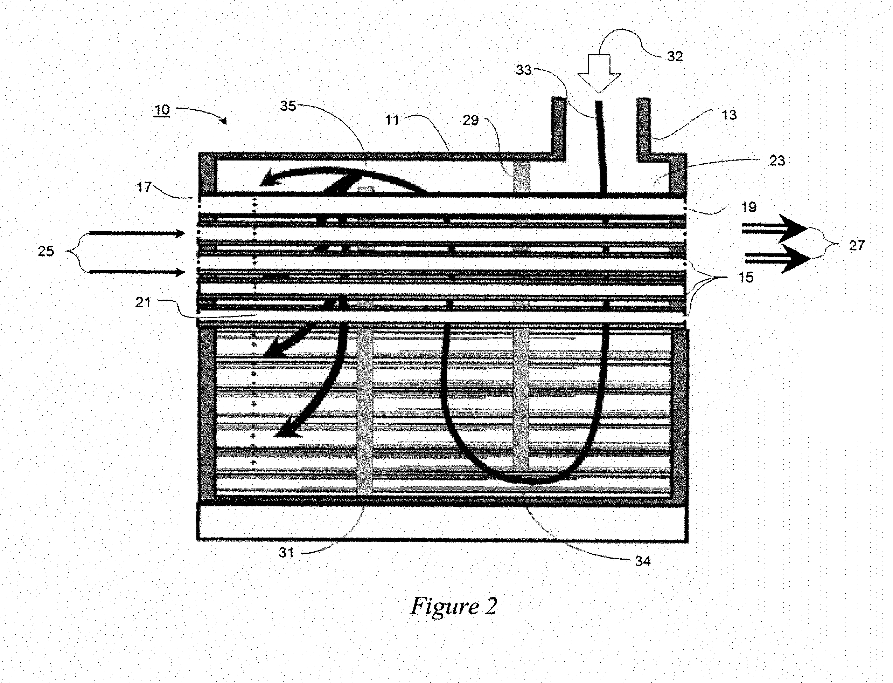

Figure 2 illustrates a multi-tube nozzle assembly 10 in accordance to an embodiment of the invention that provides for a more uniform flow distribution. The multi-tube nozzle assembly 10 of this embodiment includes a first baffle 29 and a second baffle 31 disposed orthogonal to the tubes 15. First baffle 29 and second baffle 31 may be plates inserted in the housing 11 designed to constrain the flow of fuel (illustrated by arrow 32) along a fuel path (illustrated by arrow 33). In the example of Figure 2, baffle 29 may extend from the interior surface of the top of the housing 11 to a point just above the interior surface of the bottom of the housing 11 providing a gap 34 through which the fuel will flow. Similarly second baffle 31 may extend from the interior surface of the bottom of the housing 11 to a point just below the interior surface of the top of the housing 11 providing a gap 35 through which the fuel will flow. Although the embodiment illustrated in Figure 2 shows two baffles, it should be understood that a single baffle, and more than two baffles may be used in a multi-tube nozzle assembly 10. Similarly, any number of tubes 15 may be used in a multi-tube nozzle assembly 10.

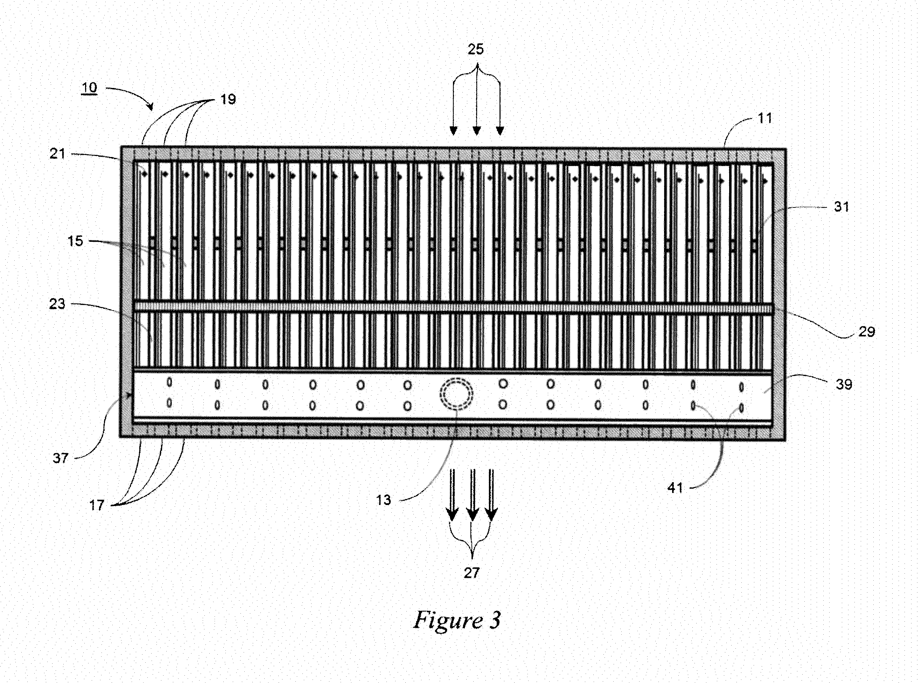

Illustrated in Figure 3 is another embodiment of a multi-tube nozzle assembly 10 in accordance with the present invention. In this embodiment a fuel distribution assembly 37 is provided to more uniformly distribute the fuel into the plenum 23. The fuel distribution assembly 37 may comprise a partial cylinder 39 having a plurality of holes 41 that provide an even distribution of the fuel into the plenum 23. The fuel distribution assembly 37 distributes the fuel circumferentially before allowing the fuel to flow radially. The fuel distribution assembly 37 may comprise any means that evenly disperses the fuel into the plenum 23, such as porous materials, diffusers and the like.

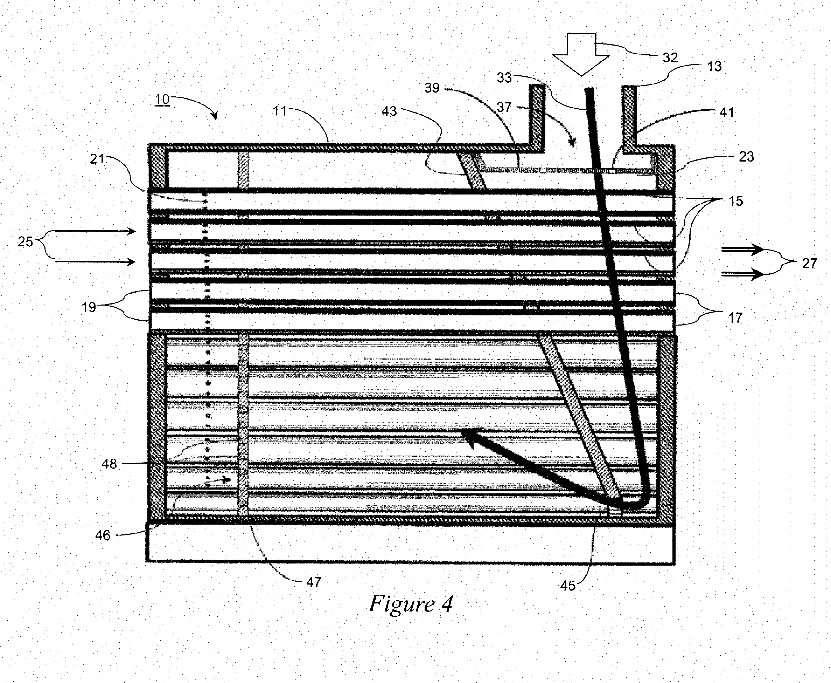

Illustrated in Figures 4 is another embodiment of a multi-tube nozzle assembly 10 in accordance with the present invention. In this embodiment, an angled baffle 43 is provided, disposed transverse to the tubes 15 extending from the top interior surface of the housing 11 at an angle towards a point above the bottom interior surface of the housing 11, thereby providing an opening 45 and defining an extended fuel path 33. The multi-tube nozzle assembly 10 may also include a fuel distribution assembly 37 including a partial cylinder sheet 39 with a plurality of holes or openings 41. A normalization assembly 46 may also be disposed upstream from the fuel apertures 21. In one embodiment the normalization assembly 46 may be a diffuser or porous panel 47, such as, for example a panel 47 having a plurality of orifices 48. The normalization assembly 46 introduces a pressure loss and forces a uniform fuel mass distribution in an area of the plenum 23 where the fuel apertures 21 are located.

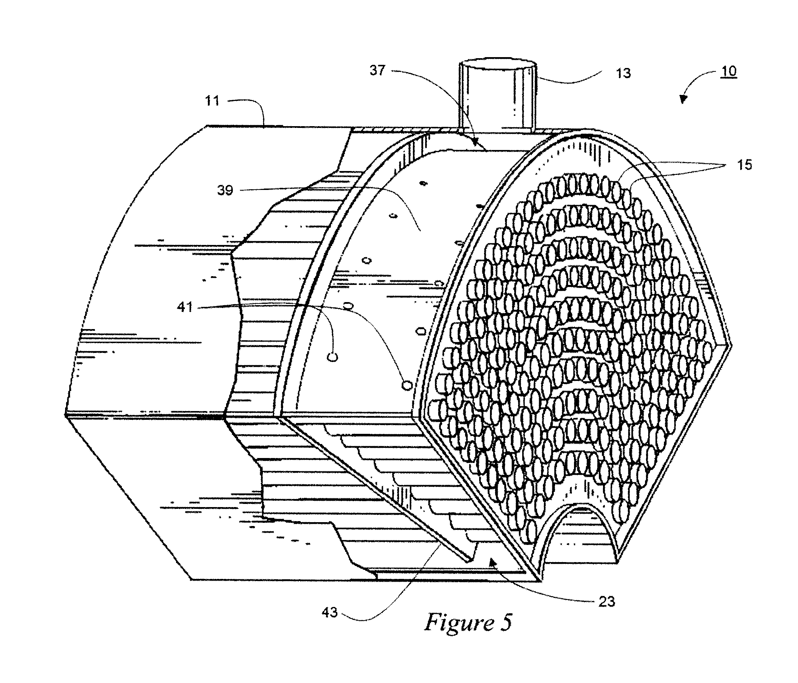

Figure 5 illustrates yet another embodiment of a multi-tube nozzle assembly 10 in accordance with the present invention. In this embodiment, an angled baffle 43 is provided. The embodiment also includes a fuel distribution assembly 37 provided to more uniformly distribute the fuel into the plenum 23.

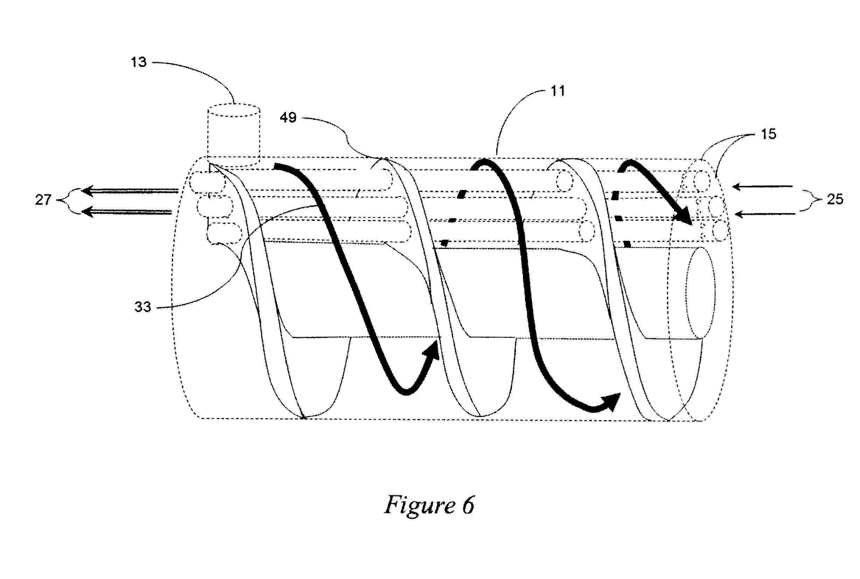

Illustrated in Figure 6 is another embodiment of a multi-tube nozzle assembly 10 in accordance with the present invention. In this embodiment, a helical baffle 49 is provided to create a helical fuel path 33 around the exterior surface of the tubes 15.

With the addition of baffles the fuel is forced to flow along a predefined flow path for a sufficiently long length such that the temperature of the fuel is increased to a point at which additional heat pickup, due to varying flow path lengths to individual tubes, will have an insignificant impact on relative density for the fuel in the plenum 23. The increased heat transfer reduces the differences in the temperature of the fuel at the fuel apertures 21 of the different tubes 15. The longer the fuel path, the longer the fuel is in contact with the tubes 15 (see above in the plenum 23) resulting in a lower temperature difference that will be observed at the fuel apertures 21. The extended fuel paths and provided by the different embodiments shown in Figures 2-6 limit the amount of fuel density spatial variation around the fuel apertures 21 of the tubes 15 of a multi-tube nozzle assembly 10. In effect, the fuel is forced to flow along enough path length to pick up enough heat so that the spatial variation in fuel temperature in minimized at the location of the fuel apertures 21. The fuel may be forced to flow back and forth over many tubes 15 enough times so that the fuel temperature becomes very close to the air temperature flowing through the tubes 15. At that point the fuel can then be sent to the fuel apertures 21 without further increasing its temperature and this assures substantially uniform fuel temperature at every fuel aperture 21, which, if the pressure field is uniform, would result in substantially same amount of fuel being delivered to each tube 15. Based on results from computational fluid dynamics (CFD) models, a conventional assembly such as the one illustrated in Figure 1, without the baffles, has been shown, to result in some tubes receiving 15% more or less fuel than the average and a relative fuel flow standard deviation of over 6%. However, with the addition of the baffles the temperature of the fuel entering the tubes 15 is maintained substantially uniform which has been shown through CFD models to reduce the maximum variation of fuel entering the tubes 15 to within 5% with a relative fuel mass flow variation of less than 3%.

Significant improvements in emissions can be achieved by reducing the difference in the fuel flow between each fuel aperture 21 across the plurality of tubes 15. Another advantage of the different embodiments of a multi-tube nozzle assembly 10 shown in Figures 4-6 is that the area of the fuel apertures 21 can be increased in size for the same pressure drop to accommodate the lower density of the higher temperature fuel. Small fuel aperture areas commonly seen in conventional multi-tube nozzle 9 pose a significant risk of clogging in the field. Increasing the area of the fuel apertures 21 would mitigate this clogging risk. Additionally, with larger fuel apertures 21 the tolerance required to maintain uniformity of the area for the opening may be relaxed (i.e. tolerances for larger diameter fuel apertures 21 are larger than tolerances for smaller fuel apertures 21) making them easier and cheaper to fabricate.

While the methods and apparatus described above and/or claimed herein are described above with reference to an exemplary embodiment, it will be understood by those skilled in the art that various changes may be made and equivalence may be substituted for elements thereof without departing from the scope of the methods and apparatus described above and/or claimed herein. In addition, many modifications may be made to the teachings of above to adapt to a particular situation without departing from the scope thereof. Therefore, it is intended that the methods and apparatus described above and/or claimed herein not be limited to the embodiment disclosed for carrying out this invention, but that the invention includes all embodiments falling with the scope of the intended claims. Moreover, the use of the term's first, second, etc. does not denote any order of importance, but rather the terms first, second, etc. are used to distinguish one element from another.

## Claims

1. A method for reducing emissions in a turbo machine comprising:
providing fuel to a fuel nozzle (9) having a plenum (23) and a plurality of tubes (15) each tube (15) having at least one fuel aperture (21);
flowing the fuel into each tube (15) through the aperture (21) in each tube (15), the fuel flowing into each tube (15) at a mass flow rate for each tube (15); and
reducing the differences in the mass flow rate of the fuel into each tube (15).

2. The method of claim 1, wherein reducing the differences in the mass flow rate comprises increasing the flow path (33) of the fuel (32) through the plenum (23) to increase heat transfer from the tubes to the fuel.

3. The method of claim 2, wherein increasing the flow path (33) comprises flowing the fuel around at least one baffle (29) in the plenum (23).

4. The method of claim 3, wherein the at least one baffle (29) comprises at least one segmental baffle.

5. The method of claim 4, wherein the at least one segmental baffle is disposed transverse to a longitudinal axis defined by the nozzle (9).

6. The method of claim 4, wherein the at least one segmental baffle is disposed orthogonal to a longitudinal axes defined by the nozzle (9).

7. The method of claim 3, wherein the at least one baffle (29) comprises at least one helical baffle (49).

8. The method of any of claim 3 to 7, further comprising a normalization assembly (46) disposed upstream from the apertures (21), the normalization assembly (37) comprising a plate with a plurality of orifices (48).

9. The method of any preceding claim, further comprising distributing the fuel circumferentially before flowing the fuel radially.

10. The method of any preceding claim, further comprising flowing the fuel around the tubes (15) in a flow path sufficiently long to raise the fuel temperature to a substantially uniform temperature through heat transfer from the tubes (15).

11. A fuel nozzle comprising:
a plurality of tubes (15), each tube (15) having an outer surface, a proximate end (17) and a distal end (19);
each tube (15) having at least one opening (21), each opening (21) allowing fuel to enter the tubes (15) at a flow rate;
a housing (11) surrounding the tubes (15), the inner surface of the housing (13) and the outer surfaces of the tube (15) defining a plenum (23);
a fuel port (13) coupled to the plenum (23) to provide fuel to the plenum (23); and
an assembly (29) that reduces differences in fuel mass flow rate into each tube (15).

12. The fuel nozzle of claim 11, wherein the assembly comprises a component (29) that extends a fuel path.

13. The fuel nozzle of claim 12, wherein the component comprises at least one segmental baffle or at least one helical baffle (49) disposed in the plenum (23).

14. The fuel nozzle of any of claims 11 to 13, further comprising a fuel distribution assembly (37), wherein the fuel distribution assembly (37) comprises a partial cylinder sheet with a plurality of holes.

15. The fuel nozzle of any of claims 11 to 14, further comprising a flow normalization assembly (46) that forces a uniform fuel mass distribution in an area of the plenum (23) proximate to the openings (21), the flow normalization assembly (46) comprises a porous plate (47).
